# FASCICULE DE BREVET EUROPEEN

(11) **EP 0 733 565 B1**
(45) Date de publication et mention de la délivrance du brevet: **22.07.1998**
(21) Numéro de dépôt: 96400560.7
(22) Date de dépôt: 18.03.1996
(51) Int. Cl.: B65G 47/38, B07C 5/36

(54) **Dispositif de transport de produits, tels que des fruits et légumes dans une station de tri de ceux-ci**
Fördervorrichtung für Produkte wie Früchte und Gemüse in einer Sortierstation
Conveyor device for products such as fruits and vegetables in a sorting station

(30) Priorité: 23.03.1995 FR 9503441
(43) Date de publication de la demande: 25.09.1996
(73) Titulaire: XEDA INTERNATIONAL, 13670 Saint-Andiol (FR)
(72) Inventeur: Sardo, Alberto, 13160 Chateaurenard (FR)
(74) Mandataire: Habasque, Etienne Joel Jean-François

(56) Documents cités:
- DE-A- 3 329 378
- FR-A- 2 304 413

## Description

La présente invention concerne un dispositif de transport de produits tels que des fruits et légumes dans une station de tri de ceux-ci.

On connait déjà dans l'état de la technique, un certain nombre de dispositifs de transport de produits de ce type, qui comportent une chaîne de déplacement sur laquelle sont fixés des organes de support des produits, déplaçables entre une première position de transport des produits dans la station et une seconde position d'évacuation des produits du dispositif, sous le contrôle de moyens de commande de tri des produits.

Ces dispositifs de transport sont par exemple intégrés dans des lignes de conditionnement de produits munies par exemple de moyens de calibrage pondéral ou optique des produits ou d'autres moyens d'analyse de ceux-ci.

On conçoit alors que dans ces lignes, les produits passent tout d'abord dans la station d'analyse, dans laquelle ceux-ci sont par exemple pesés ou analysés d'une autre façon, puis dans la station de tri dans laquelle les produits sont évacués du dispositif de transport en fonction d'un tri réalisé à partir des informations délivrées par la station d'analyse.

On a déjà décrit dans le document FR-A-2 681 800, au nom de la Demanderesse, un appareil de calibrage pondéral automatique notamment de fruits, qui comporte une chaîne de pesée pourvue d'éléments de support de fruits et déplaçable par rapport à une balance entre un poste d'alimentation et un poste d'évacuation.

Dans cet appareil, les éléments de support de fruits comprennent des doigts de réception des fruits à calibrer, deux éléments de support successifs assurant la présentation à la balance d'un fruit à calibrer, chaque élément de support étant articulé sur la chaîne de pesée par son extrémité opposée aux doigts et comprenant à l'aplomb des doigts, un talon d'appui sur au moins un guide s'étendant le long de la chaine de pesée ou sur la balance, le guide étant pourvu d'un intervalle dans lequel est placée la balance.

D'autres documents décrivent l'utilisation de convoyeurs à chaînes ou à rouleaux pour transporter les produits dans un poste de calibrage.

Une fois pesés, les produits sont ensuite transférés sur un dispositif de transport de ceux-ci dans la station de tri.

Généralement (voir FR-A-2 304 413), les dispositifs de transport intégrés dans ces stations de tri, comprennent une chaine de déplacement sur laquelle sont fixés des organes de support des produits, tels que par exemple des godets ou autres, déplaçables entre une première position de transport des produits dans la station et une seconde position d'évacuation des produits du dispositif sous le contrôle des moyens de commande de tri des produits.

C'est ainsi par exemple que ces moyens de commande comportent des moyens de basculement par exemple des godets ou autres, pour assurer l'évacuation des produits du dispositif.

On conçoit cependant que ces dispositifs présentent un certain nombre d'inconvénients, notamment au niveau du transfert des produits entre la station d'analyse et la station de tri.

De plus, la structure des dispositifs de transport utilisés au niveau de la station de tri est relativement complexe et donc coûteuse à réaliser.

Enfin, ces dispositifs de transport sont peu ou pas du tout adaptés au transport de produits de forme allongée.

Le but de l'invention est donc de résoudre ces problèmes.

A cet effet, l'invention a pour objet un dispositif de transport de produits selon la revendication 1.

L'invention sera mieux comprise à la lecture de la description qui va suivre, donnée uniquement à titre d'exemple et faite en se référant aux dessins annexés, sur lesquels :
- la Fig.1 représente une vue de dessus d'un exemple de réalisation d'un dispositif de transport de produits selon l'invention;
- la Fig.2 représente une vue de côté d'un organe de support de produits entrant dans la constitution du dispositif de transport représenté sur la figure 1, cet organe étant illustré dans sa première position de transport des produits;
- la Fig.3 représente une vue analogue à celle de la figure 2, illustrant l'organe de support dans sa seconde position d'évacuation des produits; et
- la Fig.4 représente de façon schématique un exemple de réalisation de moyens de commande de tri entrant dans la constitution d'un dispositif de transport selon l'invention.

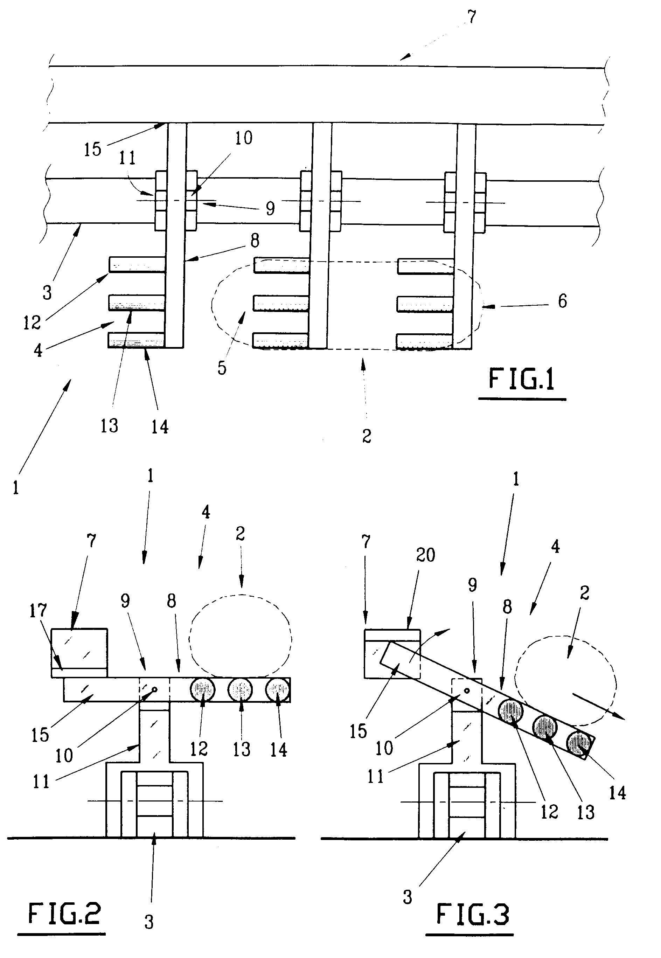

On a représenté sur la figure 1, un dispositif de transport de produits tels que des fruits et légumes dans une station de tri de ceux-ci.

Ce dispositif est désigné par la référence générale 1 sur cette figure et permet de transporter des produits tels des fruits et légumes, par exemple de forme allongée, dont l'un est représenté en traits mixtes sur cette figure et est désigné par la référence générale 2.

De façon classique, ce dispositif de transport comporte une chaîne de déplacement désignée par la référence générale 3, sur laquelle sont fixés des organes de support des produits, dont trois sont représentés sur cette figure 1 et sont désignés par les références générales 4,5 et 6.

De façon classique également, ces organes de support des produits sont déplaçables entre une première position de transport de produits dans la station et une seconde position d'évacuation de ceux-ci du dispositif, sous le contrôle de moyens de commande de tri des produits.

Dans l'exemple de réalisation représenté sur cette figure 1, ces moyens de commande sont par exemple formés par un organe en forme de guide désigné par la référence générale 7 et disposé le long de la chaîne de déplacement 3.

Selon l'invention et comme on peut le voir plus particulièrement sur les figures 2 et 3, chaque organe de support comporte un levier désigné par la référence générale 8, s'étendant par exemple au-dessus de la chaîne, à peu près perpendiculairement à l'axe de celle-ci, dont une portion intermédiaire, désignée par la référence générale 9, comporte des moyens d'articulation 10 à une extrémité d'une tige de support verticale 11 dont l'autre extrémité est fixée sur la chaine de déplacement 3.

Ce levier 8 comporte d'un côté des moyens d'articulation 10, des doigts de support des produits s'étendant à peu près parallèlement à l'axe de la chaine comme cela ressort des figures 1,2 et 3.

En effet, sur ces figures, ce côté du levier 8 comporte trois doigts désignés par les références 12,13 et 14 s'étendant à peu près parallèlement à l'axe de la chaine, pour permettre au dispositif de transport de transporter des produits par exemple de forme allongée tels que des concombres, des carottes ou autres.

On conçoit alors que dans le cas où ces produits sont des produits de forme allongée, ceux-ci reposent sur deux ou plusieurs organes de support successifs de la chaîne.

De l'autre côté des moyens d'articulation 10, le levier 8 comporte des moyens de manoeuvre désignés par la référence générale 15, adaptés pour coopérer avec les moyens de commande de tri désignés par la référence générale 7 et formés par exemple par l'organe en forme de guide qui sera décrit plus en détail par la suite, pour contrôler les déplacements du levier 8 entre la première position de transport représentée sur la figure 2, dans laquelle les produits reposent sur les doigts 12,13 et 14 du levier et la seconde position d'évacuation des produits, par pivotement du levier autour de l'axe des moyens d'articulation 10 de ce levier 8 sur la tige de support 11, comme on peut le voir sur la figure 3.

La fixation de l'extrémité correspondante de la tige de support 11 du levier 8 sur la chaîne peut être réalisée par tous moyens appropriés connus dans l'état de la technique.

Dans l'exemple de réalisation représenté, cette tige comporte à cette extrémité fixée sur la chaîne par exemple deux branches formant une fourche disposée autour de la chaîne pour assurer la fixation de chaque organe sur cette chaine.

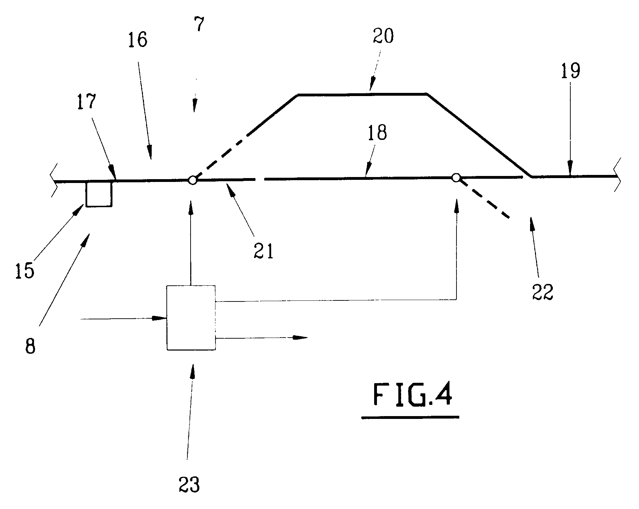

Sur la figure 4, on a représenté un exemple de réalisation de moyens de commande de tri des produits.

Ainsi qu'on l'a décrit en regard des figures précédentes, le levier 8 comporte à l'une de ses extrémités, les moyens de manoeuvre 15 adaptés pour coopérer avec ces moyens de commande pour assurer le transport des produits dans la station de tri ou leur évacuation du dispositif.

Cette évacuation peut par exemple être commandée en fonction du calibre ou d'informations relatives à une analyse optique par exemple des produits, pour assurer l'évacuation des produits par exemple dans des postes de réception de ceux-ci répartis le long du dispositif de transport en fonction du tri opéré de façon classique.

Dans ce cas, les moyens de commande 7 peuvent comporter un organe en forme de guide désigné par la référence générale 16 sur la figure 4, cet organe en forme de guide comportant par exemple des premières portions de maintien du levier 8 dans sa première position de transport des produits, désignées par les références générales 17,18 et 19 par exemple et des secondes portions formant des trajets en dérivation et désignées par exemple par la référence générale 20, autorisant le déplacement du levier 8 de sa première position de transport vers sa seconde position d'évacuation des produits, par pivotement autour de l'axe des moyens d'articulation 10 de ce levier 8 sur la tige de support 11.

Dans ce cas, cet organe en forme de guide 16 comporte à l'intersection entre ses différentes portions, des moyens formant aiguillage par exemple 21 et 22, pilotés par une unité centrale de traitement d'informations 23 recevant des informations par exemple à partir d'une station d'analyse associée au dispositif de transport de produits selon l'invention, pour assurer un tri correct des produits.

On conçoit en effet qu'en fonction des informations délivrées par exemple par cette station d'analyse, l'unité centrale de traitement d'informations 23 pilote à l'ouverture ou à la fermeture les moyens formant aiguillage 21 et 22 pour autoriser ou non le levier 8 et plus particulièrement les moyens de manoeuvre 15 à l'une des extrémités de celui-ci, à suivre le trajet correspondant en dérivation de l'organe en forme de guide, afin de permettre un basculement du levier et donc d'assurer l'évacuation du produit correspondant dans le poste de réception correspondant.

Il va de soi bien entendu que des moyens analogues à ceux représentés sur la figure 4, sont prévus en regard de chaque poste de réception des produits pour assurer un tri complet de ceux-ci.

Il va de soi également que différents modes de réalisation de ces moyens de commande de tri peuvent être envisagés.

On conçoit alors par exemple que lorsqu'un produit allongé est disposé sur plusieurs organes de support du dispositif de transport selon l'invention, un capteur peut par exemple être placé à l'entrée de celui-ci pour déterminer la longueur de ce produit et délivrer également à l'unité centrale, des informations de contrôle du fonctionnement des moyens d'aiguillage pour autoriser le passage d'un nombre correspondant d'organes de support dans le trajet en dérivation de l'organe en forme de guide pour assurer une évacuation de ce produit du dispositif de transport par pivotement contrôlé des organes de support sur lesquels repose ce produit.

Le dispositif de transport qui vient d'être décrit peut être associé à différents types de stations de calibrage ou d'analyse optique des produits pour assurer le tri de ceux-ci.

Cette station de calibrage peut bien entendu comporter n'importe quelle structure de dispositifs de transport tels que ceux à organes de support successifs à rouleaux ou à chaînes de convoyage mentionnés précédemment.

## Revendications

1. Dispositif de transport de produits, tels que des fruits et légumes, dans une station de tri de ceux-ci, du type comportant une chaine de déplacement (3) sur laquelle sont fixés des organes de support (4,5,6) des produits, déplaçables entre une première position de transport des produits dans la station et une seconde position d'évacuation des produits du dispositif, sous le contrôle des moyens (7) de commande de tri des produits, chaque organe de support comportant un levier (8) dont une portion intermédiaire (9) comporte des moyens d'articulation (10) à une extrémité d'une tige de support (11) dont l'autre extrémité est fixée sur la chaîne de déplacement (3) et comportant des moyens de manoeuvre (15) adaptés pour coopérer avec les moyens de commande de tri (7), pour contrôler les déplacements du levier (8) entre la première position de transport et la seconde position d'évacuation des produits, par pivotement autour de l'axe des moyens d'articulation (10) du levier sur la tige, caractérisé en ce que le levier (8) comporte d'un côté des moyens d'articulation (10), des doigts (12,13,14) de support des produits, s'étendant à peu près parallèlement à l'axe de la chaîne et de l'autre côté des moyens d'articulation (10) lesdits moyens de manoeuvre (15).

2. Dispositif selon la revendication 1, caractérisé en ce que les moyens de commande de tri (7) des produits comportent un organe en forme de guide (16) adapté pour coopérer avec les moyens de manoeuvre (15) du levier de chaque organe de support et comprenant des portions (17,18,19) de maintien du levier dans sa première position et des portions (20) formant un trajet en dérivation, autorisant un déplacement du levier dans sa seconde position d'évacuation des produits, ces différentes portions de l'organe en forme de guide étant reliées les unes aux autres à travers des moyens formant aiguillage (21,22) pilotés par une unité centrale de traitement d'informations de tri (23).

3. Dispositif selon la revendication 1 ou 2, caractérisé en ce que le levier (8) s'étend au-dessus de la chaîne, à peu près perpendiculairement à l'axe de celle-ci.

## Claims

1. Device for transporting products such as fruit and vegetables in a station for sorting them, of the type including a conveyor chain (3) to which are fixed membrane (4, 5, 6) for supporting the products, which can move between a first position for transporting the products in the station and a second position for removing the products from the device, under the control of the means (7) for controlling the sorting of the products, each support member including a lever (8) an intermediate portion (9) of which includes means (10) for articulation to one end of a support stem (11) the other end of which is feed to the conveyor chain (3), and including operating means (15) designed to interact with the sort control means (7) for controlling the movements of the lever (8) between the first position for transport and the second position for removing the products, by pivoting about the axis of the means (10) for articulating the lever to the stem; characterized in that the lever (8) includes, an one side of the articulation means (10), fingers (12, 13, 14) for supporting the products, extending more or less parallel to the axis of the chain and, on the other side of the articulation means (10), the said operating means (15).

2. Device according to Claim 1, characterized in that the means (7) for controlling the sorting of the products include a member (16) in the form of a guide designed to interact with the operating means (15) of the lever of each support member and comprising portions (17, 18, 19) for keeping the lever in its first position and portions (20) forming a branched off path allowing the lever to move into its second position for removing the products, these various portions of the member in the form of a guide being connected to one another through means forming routing gear (21, 22) driven by a central unit (23) for processing the sort data.

3. Device according to Claim 1 or 2, characterized in that the lever (8) extends above the chain, more or less perpendicular to the axis thereof.

## Patentansprüche

1. Vorrichtung zum Transportieren von Erzeugnissen, wie etwa Obst und Gemüse in einer Station zum Sortieren derselben, aufweisend eine Fortbewegungskette (3), auf welcher Tragorgane (4, 5, 6) für die Erzeugnisse befestigt sind, die zwischen einer ersten Position zum Transportieren der Erzeugnisse in der Station und einer zweiten Position zum Austragen der Erzeugnisse aus der Vorrichtung unter Steuerung einer Steuereinrichtung (7) zum Sortieren der Erzeugnisse fortbewegbar sind, wobei jedes Tragorgan einen Hebel (8) umfaßt, von dem ein Zwischenabschnitt (9) eine Schwenkeinrichtung (10) mit einem Tragstangenende (11) umfaßt, deren anderes Ende auf der Fortbewegungskette (3) befestigt ist und eine Betätigungseinrichtung (15) umfaßt, die dazu ausgelegt ist, mit der Sortiersteuereinrichtung (7) zusammenzuwirken, um die Verstellungen des Hebels (8) zwischen der ersten Transportposition und der zweiten Erzeugnisaustragposition durch schwenken um die Achse der Schwenkeinrichtung (10) des Hebels an der stange zu steuern, dadurch gekennzeichnet, daß der Hebel (8) auf einer Seite der Schwenkeinrichtung (10) Zapfen (12, 13, 14) zum Tragen der Erzeugnisse umfaßt, die sich in etwa parallel zur Achse der Kette erstrecken, und auf der anderen Seite der Schwenkeinrichtung (10) die Betätigungseinrichtung (15).

2. Vorrichtung nach Anspruch 1, dadurch gekennzeichnet, daß die Sortiersteuereinrichtung (7) für die Erzeugnisse ein Organ in Form einer Führung (16) umfaßt, daß dazu ausgelegt ist, mit der Betätigungseinrichtung (15) des Hebels jedes Tragorgans zusammenzuwirken und Abschnitte (17, 18, 19) zum Halten des Hebels in seiner ersten Position und Abschnitte (20) umfaßt, die eine Umgehungsbahn bilden, welche eine Verstellung des Hebels in seine zweite Erzeugnisaustragposition erlauben, wobei diese unterschiedlichen Abschnitte des Organs in Form einer Fuhrung untereinander quer über eine Einrichtung verbunden sind, welche eine Verzweigung (21, 22) bildet, die durch eine zentrale Sortierverarbeitungseinheit (23) gesteuert ist.

3. Vorrichtung nach Anspruch 1 oder 2, dadurch gekennzeichnet, daß der Hebel (80) sich über der Kette (8) im wesentlichen senkrecht zur Achse derselben erstreckt.
